# EUROPÄISCHE PATENTSCHRIFT

(11) **EP 2 123 941 B1**
(45) Veröffentlichungstag und Bekanntmachung des Hinweises auf die Patenterteilung: **01.06.2011**
(21) Anmeldenummer: 09155825.4
(22) Anmeldetag: 23.03.2009
(51) Int. Cl.: F16H 37/04, F16H 61/04, F16H 61/70, F16H 3/00

(54) **Mehrgruppengetriebe eines Kraftfahrzeuges**
Motor vehicle multi-group drive
Boîte de vitesse à plusieurs groupes d'un véhicule automobile

(30) Priorität: 05.05.2008 DE 102008001537
(43) Veröffentlichungstag der Anmeldung: 25.11.2009
(73) Patentinhaber: ZF Friedrichshafen AG, 88038 Friedrichshafen (DE)
(72) Erfinder: Hoffmann, Rayk, 88048 Friedrichshafen (DE); Dittrich, Alan, 78464 Konstanz (DE)

(56) Entgegenhaltungen:
- EP-A- 1 344 965
- DE-A1- 3 626 179
- DE-A1-102006 024 370
- JP-A- 58 146 723
- US-A- 5 435 201
- US-A1- 2003 209 400

## Beschreibung

Die Erfindung betrifft ein Mehrgruppengetriebe eines Kraftfahrzeuges und ein Verfahren zum Betrieb eines Mehrgruppengetriebes eines Kraftfahrzeuges gemäß dem Oberbegriff des Patentanspruchs 1 und dem Oberbegriff des Patentanspruchs 11.

Mehrgruppengetriebe bestehen aus zwei oder mehr meist seriell angeordneten Getriebegruppen, durch deren Kombination eine hohe Gangzahl realisierbar ist. Zunehmend werden sie als automatisierte Schaltgetriebe, beispielsweise bestehend aus einer Eingangsgruppe, einer Hauptgruppe und einer Nachschaltgruppe, konzipiert. Derartige Getriebe finden insbesondere in Nutzfahrzeugen Anwendung, da sie eine besonders feine Gangabstufung mit beispielsweise 12 oder 18 Gängen bieten und einen hohen Wirkungsgrad aufweisen. Bei einer geringeren Gangzahl sind auch Konfigurationen lediglich aus einer Hauptgruppe und einer Eingangsgruppe oder einer Hauptgruppe und einer Nachschaltgruppe möglich. Zudem zeichnen sie sich im Vergleich zu manuellen Schaltgetrieben durch einen hohen Bedienungskomfort aus, und sind im Vergleich zu Automatgetrieben besonders wirtschaftlich in den Herstellungs- und Betriebskosten.

Bauartbedingt unterliegen herkömmliche Mehrgruppen-Schaltgetriebe, wie alle nicht unter Last schaltenden manuellen oder automatisierten Schaltgetriebe, einer Zugkraftunterbrechung beim Gangwechsel, da stets der Kraftfluss vom Antriebsmotor durch Öffnen einer Kupplung unterbrochen wird, um den eingelegten Gang lastfrei auszulegen, in einer Neutralstellung Getriebe und Antriebsmotor auf eine Anschlussdrehzahl zu synchronisieren und den Zielgang einzulegen. Durch das Rollen des Fahrzeuges während der Zugkraftunterbrechung können unerwünschte Geschwindigkeitserhöhungen oder Geschwindigkeitsverluste auftreten. Zudem kann ein erhöhter Kraftstoffverbrauch entstehen. Während sich die Zugkraftunterbrechungen bei Personenwagen durch Einbußen der Fahrdynamik in der Regel eher nur störend auswirken, beispielsweise bei einer sportlich orientierten Fahrweise beim Hochschalten, kann sich bei mittelschweren oder schweren Nutzfahrzeugen die Fahrgeschwindigkeit derart verzögern, dass ein Hochschalten unmöglich wird und es an Steigungen zu unerwünschten Rückschaltvorgängen, Kriechfahrten oder sogar zu zusätzlichen Anfahrvorgängen kommt.

Aus der DE 10 2006 024 370 A1 der Anmelderin ist ein zugkraftunterstütztes automatisiertes Mehrgruppengetriebe mit einer Splittergruppe als Eingangsgetriebe, einem Hauptgetriebe als Grundgetriebe und einer Bereichsgruppe als Ausgangs- oder Nachschaltgetriebe, entsprechend dem Oberbegriff des Anspruches 1, bekannt. Die Bauweise des bekannten Mehrgruppengetriebes mit dem Eingangsgetriebe und dem Hauptgetriebe ermöglicht die Schaltung eines Direktganges als einen Zwischengang während eines Gangwechsels. Dazu wird temporär eine direkte Verbindung einer Eingangswelle des Eingangsgetriebes mit einer Hauptwelle des Hauptgetriebes mittels einer Lastschaltkupplung hergestellt. Dadurch werden das Hauptgetriebe und die Splittergruppe lastfrei, so dass der eingelegte Gang ausgelegt, das Getriebe synchronisiert und der Zielgang eingelegt werden kann, während die Anfahrkupplung eingekuppelt bleibt. Die Lastschaltkupplung überträgt dabei ein Motordrehmoment auf den Getriebeausgang, wobei ein freiwerdendes dynamisches Moment bei einer Drehzahlabsenkung zwischen Ursprungsgang und Zielgang genutzt wird, um den Zugkrafteinbruch weitgehend zu kompensieren. Die Lastschaltkupplung kann zwischen dem Eingangsgetriebe und dem Hauptgetriebe oder zwischen der Anfahrkupplung und dem Eingangsgetriebe angeordnet sein. Die Übersetzung des Zwischenganges ist durch die Direktverbindung der Eingangswelle mit der Hauptwelle als Direktgang festgelegt. Ein Umschalten der Bereichsgruppe ist nicht ohne weiteres zugkraftunterstützt.

Weiterhin ist aus der DE 198 44 783 C1 ein Verfahren zum Schalten eines Zahnräderwechselgetriebes mit formschlüssigen Zahnradkupplungen bekannt, bei dem über ein in das Wechselgetriebe integriertes Zahnräder-Synchronisiergetriebe, wahlweise mittels einer i > 1 übersetzten Zahnradstufe oder einer i < 1 übersetzten Zahnradstufe, eine Antriebsverbindung zwischen einer Getriebeeingangswelle und einer Getriebeausgangswelle herstellbar ist. Den Zahnradstufen ist jeweils eine Reibkupplung zugeordnet, die bei einem Gangwechsel eingesetzt werden, um die Drehzahl der Eingangswelle an die jeweilige Synchrondrehzahl anzupassen. Durch die Steuerung der Reibschlussverbindung zwischen der Eingangswelle und der Ausgangswelle und/oder des Antriebsmotors werden die Drehzahl der Eingangswelle einerseits und der Drehmomentverlauf an der Ausgangswelle beim Gangwechsel andererseits beeinflusst. Ein zwischen dem Antriebsmotor und der Eingangswelle angeordnetes reibschlüssiges Anfahrelement bleibt während des Gangwechsels eingerückt. Somit ist der Gangwechsel mit einer Lastschaltung vergleichbar. Das Verfahren kann durch einen geeigneten wechselnden Einsatz der Reibschlussverbindungen über die eine oder die andere Zahnradstufe des Synchronisiergetriebes bei Hoch- und Rückschaltungen im Zug- und Schubbetrieb eingesetzt werden.

Aus der EP 1 096 172 A2 ist ein automatisiertes Lastschaltgetriebe mit unsynchronisierten Gangschaltkupplungen bekannt. Zur Synchronisierung sind ebenfalls zwei Reibkupplungen vorgesehen. Eine gemeinsame Schwungscheibe ist als ein Kupplungseingangsteil zwischen einer Kurbelwelle des Antriebsmotors und einer Getriebeeingangswelle angeordnet. Die eine Synchronisierkupplung ist mit der niedrigsten Gangstufe gekoppelt und für Schubschaltungen sowie als Anfahrelement vorgesehen. Die andere Synchronisierkupplung ist mit der höchsten Gangstufe gekoppelt und für Zugschaltungen vorgesehen. Die Synchronisierkupplungen stehen einerseits über den Schub- bzw. Zugschaltgang mit einer Getriebeabtriebswelle und andererseits über das Kupplungseingangsteil mit der Getriebeeingangswelle in Verbindung. Die Synchronisierung bei einem Gangwechsel, d.h. die Drehzahlangleichung der Getriebeeingangswelle an die Drehzahl des Zielgangzahnradsatzes erfolgt durch Schließen oder Öffnen der Schub- bzw. Zugsynchronisierkupplung. Während einer Zugschaltung werden die Synchronisierkupplungen und die Gangschaltkupplungen in einer solchen Schaltabfolge betätigt, die eine Übertragung eines Antriebsmomentes auf die Getriebeabtriebswelle gewährleistet, so dass der Gangwechsel ohne Zugkraftunterbrechung erfolgt. Im Gegensatz zu bekannten zugkraftunterstützten sequenziell schaltenden Doppelkupplungsgetrieben ermöglicht dieses Getriebe auch Gangsprünge über mehrere Stufen.

Die beiden letzt genannten Druckschriften beschreiben jeweils ein Wechselgetriebe mit Lastschaltcharakteristik. Die darin beschriebenen Kupplungen zur Synchronisierung, bei Aufrechterhaltung eines Momentenflusses zum Abtrieb, sind jeweils mit der niedrigsten bzw. höchsten Gangstufe des Wechselgetriebes gekoppelt. Diese Lösung kann jedoch nicht ohne weiteres auf mehrere im Kraftfluss hintereinander angeordnete Getriebegruppen eines Mehrgruppengetriebes und dessen Schaltabfolge übertragen werden.

Vor diesem Hintergrund liegt der Erfindung die Aufgabe zugrunde, ein Mehrgruppengetriebe und ein Verfahren zum Betrieb eines Mehrgruppengetriebes anzugeben, die zugkrafterhaltende Gangwechsel bei einem weiter verbesserten Schaltkomfort mit vergleichsweise geringem Aufwand an Kosten, Konstruktion und Einbauraum ermöglichen.

Die Lösung dieser Aufgabe ergibt sich aus den Merkmalen der unabhängigen Ansprüche, während vorteilhafte Ausgestaltungen und Weiterbildungen der Erfindung den Unteransprüchen entnehmbar sind.

Der Erfindung liegt die Erkenntnis zugrunde, dass mit Hilfe von elektromagnetischen Kupplungen Gangstufen, Gangkonstanten und/oder Gangbereiche einzelner Gruppen eines automatisierten Mehrgruppengetriebes unter Last geschaltet oder über zusätzliche Radsätze durch leistungsverzweigte Zwischengänge im Kraftfluss überbrückt werden können, um Zugkraftunterbrechungen bei Schaltvorgängen dieser Gruppen zu kompensieren oder zu vermeiden, so dass bei dem Getriebe ohne Betätigung eines Anfahrelementes beim Gangwechsel oder sogar bei gänzlichem Verzicht auf ein separates Anfahrelement ein hoher Betriebskomfort erreicht wird.

Demnach geht die Erfindung zunächst aus von einem Mehrgruppengetriebe eines Kraftfahrzeuges mit wenigstens zwei in einem Antriebsstrang angeordneten Getriebegruppen, bei dem Mittel zur Zugkraftunterstützung bei Gangwechseln vorgesehen sind. Zur Lösung der gestellten Aufgabe sieht die Erfindung zudem vor, dass wenigstens eine als Lastschaltmittel ausgebildete Elektromagnetkupplung angeordnet ist, über die, unter Kraftflussumgehung wenigstes einer als Zahnrad-Wechselgetriebe ausgebildeten Hauptgruppe, eine Wirkverbindung zwischen einer Antriebswelle und einer Getriebehauptwelle oder einer Getriebeabtriebswelle herstellbar ist.

Unter einem Gangwechsel wird ein Schaltvorgang verstanden, bei dem ein Ursprungsgang ausgelegt und ein Zielgang eingelegt wird, wobei auch der Spezialfall eingeschlossen ist, dass der Zielgang dem Ursprungsgang entspricht, also keine Übersetzungsänderung erfolgt. Unter einer Elektromagnetkupplung wird eine mittels der Magnetkraft eines Elektromagneten betätigbare Kupplung verstanden.

Erfindungsgemäß werden in automatisierten Mehrgruppengetrieben mit einer Splittergruppe mit zwei Gangkonstanten als Vorschaltgetriebe, einer dreioder viergängigen Hauptgruppe als Grundgetriebe in Vorgelegewellenbauweise sowie einer Bereichsgruppe in Planetenbauweise als Nachschaltgetriebe, beispielsweise in einem schweren Nutzfahrzeug, Elektromagnetkupplungen zur Zugkraftunterstützung vorteilhaft eingesetzt. Sie zeichnen sich besonders durch ihre genaue Steuerbarkeit, kurze Ansprechzeit und kompakte Bauweise aus. Zudem ist keine zusätzliche oder größer dimensionierte Ölpumpe, wie sie gegebenenfalls bei hydraulischen Kupplungen zur Zugkraftunterstützung erforderlich wäre, zur Kupplungsbetätigung erforderlich.

Vorzugsweise ist ein derartiges Getriebe mit zwei Vorgelegewellen konzipiert, so dass die im Folgenden beschriebenen Ausführungsformen - soweit von "einer" oder "wenigstens einer" Vorgelegewelle die Rede ist - sinngemäß auf zwei Vorgelegewellen zu erweitern sind. Die Leistung verzweigt sich dementsprechend über zwei Vorgelegewellen.

Eine erfindungsgemäße Elektromagnetkupplung kann bei einem Gangwechsel einen zusätzlichen Zahnradsatz als einen Zwischengang zuschalten, wobei der Antrieb des Zwischengangzahnradsatzes über wenigstens eine Vorgelegewelle erfolgt. Dabei weist die Elektromagnetkupplung vorteilhaft einen antriebsseitigen topfartigen Rotor auf, der einen abtriebsseitigen, axial verschiebbaren scheibenförmigen Anker und einen elektrischen Erregermagneten umgibt, wobei der drehbar auf einer abtriebsseitigen Welle gelagerte Rotor außenwandig mit einem Losrad des Zwischengangzahnradsatzes drehfest verbunden ist, und innenwandig kupplungseingangsseitige Reibmittel aufweist.

Der Anker sowie kupplungsausgangsseitige Reibmittel sind drehfest auf der abtriebsseitigen Welle angeordnet und die Reibmittel sind relativ zueinander axial beweglich, so dass, abhängig von einer Bestromung des Erregermagneten bzw. einer eingebetteten Erregerspule, durch eine magnetkraftbewirkte Axialverschiebung des Ankers die Reibmittel miteinander in Wirkverbindung bringbar sind und eine schlupfende oder reibschlüssige Drehmomentübertragung der Elektromagnetkupplung erzeugbar ist. Als eine Druckplatte des Kupplungspaketes kann eine Stirnseite des Erregermagneten fungieren, wobei vorteilhaft zur Erhöhung der Andruckkräfte eine an sich bekannte Kugelrampeneinrichtung vorgesehen sein kann. Grundsätzlich sind auch andere elektromagnetisch betätigbare Kupplungsaufbauten möglich.

Beansprucht ist eine Anordnung, bei der über axial verlängerte Vorgelegewellen der Zwischengangzahnradsatz mit der Elektromagnetkupplung der Bereichsgruppe nachgeordnet ist, wobei ein auf der Vorgelegewelle drehfest sitzendes Festrad mit einem auf der Getriebeabtriebswelle drehbar gelagerten Losrad im Eingriff steht, welches über die Elektromagnetkupplung mit der Getriebeabtriebswelle drehfest verbindbar ist. In diesem Fall beinhaltet die Zugkraftunterstützung auch ein Umschalten der Bereichsgruppe während des Gangwechsels, unabhängig davon, ob die Bereichsgruppe lastschaltbar ausgebildet ist oder nicht oder ob die Getriebehauptwelle direkt mit der Getriebeabtriebswelle verbunden ist oder nicht.

Es ist vorgesehen, dass die Splittergruppe zwei Gangkonstanten umfasst, wobei den Gangkonstanten vorzugsweise jeweils eine weitere Elektromagnetkupplung zugeordnet ist, mittels der die Gangkonstanten unter Last schaltbar sind. Die Elektromagnetkupplungen ersetzen die üblichen synchronisierten Schalteinrichtungen zum Schalten der Gangkonstanten. Dadurch wird einerseits eine Zugkraftunterbrechung beim Umschalten der Gangkonstanten vermieden. Andererseits können die Elektromagnetkupplungen der Splittergruppe auch als Anfahrelement eingesetzt werden, so dass eine separate herkömmliche Anfahrkupplung entfallen kann, was sich zusätzlich kostengünstig sowie Raum und Gewicht sparend auswirkt.

Die Umschaltfunktion unter Last sowie die Anfahrfunktion kann vorteilhaft dadurch erreicht werden, dass die Elektromagnetkupplung der ersten, motorseitigen Gangkonstanten einen Anker, der axial verschiebbar auf der Antriebswelle angeordnet ist, und einen den Anker umgebenden Rotor, der mit einem Losrad der ersten Gangkonstanten drehfest verbunden und mit diesem drehbar auf der Antriebswelle angeordnet ist, sowie einen Erregermagnet aufweist, und dass die Elektromagnetkupplung der zweiten, getriebeseitigen Gangkonstanten einen Anker, der axial verschiebbar auf der Antriebswelle angeordnet ist, und einen den Anker umgebenden Rotor, der mit einem Losrad der zweiten Gangkonstanten drehfest verbunden und mit diesem drehbar auf der Antriebswelle angeordnet ist, sowie einen Erregermagnet aufweist, wobei auf der Antriebswelle jeweils angeordnete kupplungseingangsseitige Reibmittel und an den Rotoren jeweils angeordnete kupplungsausgangsseitige Reibmittel wechselseitig in Reibschluss bringbar sind, so dass die Losräder wahlweise wechselseitig mit der Antriebswelle drehfest verbindbar sind. Die Elektromagnetkupplungen können dabei nacheinander oder überschneidend geöffnet bzw. geschlossen werden.

Es ist vorgesehen, dass bei einem Gangwechsel mit einen Schaltvorgang innerhalb der Hauptgruppe, mittels der zugehörigen Elektromagnetkupplung der Zwischengangzahnradsatz als Zwischengang geschaltet wird, wodurch der Zwischengang unter Kraftflussumgehung der Hauptgruppe eine Wirkverbindung zwischen der Antriebswelle und der Getriebeabtriebswelle hergestellt. Dadurch wird zugkraftunterbrechungsfreies Zughoch- oder Zugrückschalten ermöglicht. Durch Zuschalten des Zwischenganges wird das Hauptgetriebe lastfrei und somit schaltbar. Die Gangschaltkupplung des eingelegten Ursprungsganges im Hauptgetriebe bleibt vorzugsweise bis zum Umschalten in den Zielgang geschlossen. Vielmehr stützt die Elektromagnetkupplung an dem zusätzlichen Zwischengangzahnradsatz im schleifenden Zustand das Motordrehmoment am Abtrieb ab, während die Motordrehzahl dem angewählten Zielgang angepasst wird.

Da über einen entsprechenden Zwischengang die zu synchronisierenden rotierenden Massen abgebremst werden können, kann die üblicherweise zur Abbremsung der Massen bei Hochschaltvorgängen vorgesehene Getriebebremse entfallen, wodurch weitere Kosten, Raum und Gewicht eingespart werden. Erst zum Umschalten wird die Gangschaltkupplung des eingelegten Ursprungsganges im Hauptgetriebe geöffnet und bei erreichter Synchrondrehzahl der gewünschte Zielgang eingelegt. Abschließend wird die Elektromagnetkupplung wieder geöffnet und der Kraftfluss über den neuen Gang hergestellt.

Solche zugkraftunterstützten Gangwechsel sind auch mit Gangsprüngen über zwei oder mehr Gangstufen möglich. Da der Antriebsstrang während des Gangwechsels durch den Zwischengang stets vorgespannt bleibt, werden zudem Schwingungen und Schaltschläge verringert, wodurch eine zusätzliche Erhöhung des Schaltkomforts erreicht wird.

Es ist vorgesehen, dass bei einem Gangwechsel mit einen Schaltvorgang innerhalb der Splittergruppe mittels zugeordneter Elektromagnetkupplungen zwischen den Gangkonstanten umgeschaltet wird, wobei eine Wirkverbindung zwischen der Antriebswelle und der Getriebeabtriebswelle aufrechterhalten wird. Demnach werden Gangwechsel, bei denen nur die Gangkonstanten umgeschaltet werden, einfach über die Elektromagnetkupplungen der Splittergruppe direkt lastgeschaltet, so dass in diesem Fall eine Zwischengangschaltung entfallen kann.

Zur Verdeutlichung der Erfindung ist der Beschreibung eine Zeichnung mit zwei Ausführungsbeispielen beigefügt. In dieser zeigt
Fig. 1 ein Getriebeschema eines nicht von der Erfindung umfassten Mehrgruppengetriebes eines Kraftfahrzeuges mit Elektromagnetkupplungen für zugkraftunterstütze Schaltvorgänge,
Fig. 2 eine erfindungsgemäße Ausführungsform eines Mehrgruppengetriebes mit Elektromagnetkupplungen,
Fig. 3 eine schematische Darstellung einer Elektromagnetkupplung zur Schaltung eines Zwischenganges in einem größeren Maßstab, und
Fig. 4 zwei weitere Elektromagnetkupplungen zur Schaltung eines Splittergetriebes in einem größeren Maßstab.

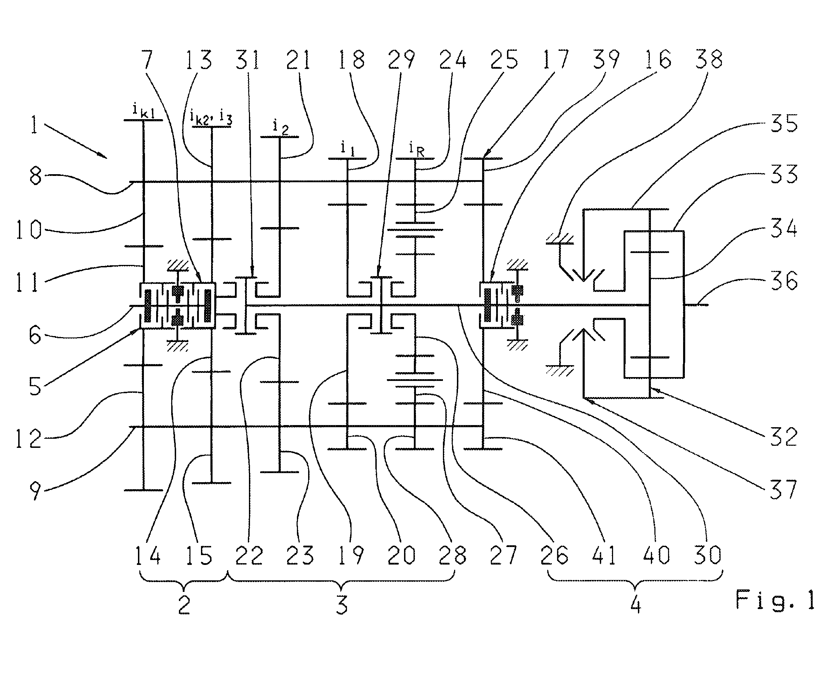

Die Fig. 1 zeigt ein als Zwei-Vorgelegewellen-Getriebe 1 ausgebildetes automatisiertes Mehrgruppengetriebe mit zwei parallelen, drehbar gelagerten Vorgelegewellen 8, 9 und drei hintereinander angeordneten Getriebegruppen 2, 3 und 4, wie es beispielsweise im Antriebsstrang eines Lastkraftwagens vorgesehen sein kann. Ein derartiges Getriebe ist an sich, d.h. ohne Zugkraftunterstützung, insbesondere aus der Baureihe ZF-AS Tronic, und mit einer zugkraftunterstützenden Direktgangschaltung aus der eingangs erwähnten DE 10 2006 024 370 A1 der Anmelderin bekannt.

Die erste, motorseitig angeordnete Getriebegruppe 2 ist als ein zweigängiges Splittergetriebe ausgebildet. Die zweite, zentrale Getriebegruppe 3 wird durch ein dreigängiges Haupt- oder Grundgetriebe gebildet. Als dritte, abtriebsseitige Getriebegruppe 4 ist ein nachgeschaltetes, zweigängiges Bereichsgetriebe angeordnet.

Das Splittergetriebe 2 weist zwei Gangkonstanten iₖ₁, iₖ₂ auf, die jeweils ein auf der ersten Vorgelegewelle 8 und auf der zweiten Vorgelegewelle 9 drehfest angeordnetes Festrad 10, 12, bzw. 13, 15 umfassen, die mit einem Losrad 11 bzw. 14 kämmen. Zur Schaltung der Gangkonstanten iₖ₁, iₖ₂ ist jeweils eine, später im Detail erläuterte, Elektromagnetkupplung 5 bzw. 7 angeordnet, über welche die Losräder 11 bzw. 14 wahlweise drehfest mit einer Antriebswelle 6 eines nicht dargestellten Antriebsmotors verbindbar sind. Über diese Elektromagnetkupplungen 5, 7 ist das Splittergetriebe 2 lastschaltbar, d.h. die Gangkonstanten iₖ₁, iₖ₂ sind ohne Antriebsunterbrechung umschaltbar. Die Elektromagnetkupplungen 5, 7 sind weiterhin als Anfahrkupplungen verwendbar und entsprechend dimensioniert.

Das Hauptgetriebe 3 weist drei Vorwärtsgänge i₁, i₂ und i₃ sowie einen Rückwärtsgang i_{R} auf. Der 1. Gang und der 2. Gang umfassen jeweils zwei Festräder 18, 20 bzw. 21, 23 und ein Losrad 19 bzw. 22. Der 3. Gang ist gemeinsam mit der zweiten Gangkonstante iₖ₂ des Splittergetriebes 2 realisiert. Der Rückwärts-Gang umfasst zwei Festräder 24, 28, ein Losrad 26 und zwei drehbar gelagerte Zwischenräder 25, 27 zur Drehrichtungsumkehr, die einerseits mit dem jeweils zugehörigen Festrad 24 bzw. 28 und andererseits mit dem Losrad 26 kämmen. Zur Schaltung des 1. Ganges und des Rückwärts-Ganges ist eine Schalteinrichtung 29 mit Schaltklauen vorhanden, über welche die zugehörigen Losräder 19 bzw. 26 wahlweise drehfest mit einer Getriebehauptwelle 30 verbindbar sind. Zur Schaltung des 2. Ganges und des 3. Ganges ist eine Klauen-Schalteinrichtung 31 angeordnet, über die wahlweise das jeweils zugehörige Losrad 14 bzw. 22 drehfest mit der Getriebehauptwelle 30 koppelbar ist.

Das nachgeschaltete Bereichsgetriebe 4 ist als ein Planetengetriebe ausgebildet. Darin ist ein Planetenradsatz 32 von einem Planetenradträger 33 geführt. Die Planetenräder kämmen einerseits mit einem zentralen Sonnenrad 34 und andererseits mit einem äußeren Hohlrad 35. Das Sonnenrad 34 ist mit der Getriebehauptwelle 30 und der Planetenradträger 33 mit einer Getriebeabtriebswelle 36 verbunden. Zur Schaltung des Bereichsgetriebes 4 ist eine Schalteinrichtung 37, vorteilhaft mit Synchronisierung, angeordnet. Diese Schalteinrichtung 37 verbindet in einer ersten Schaltstellung das Hohlrad 35 mit einem Gehäuse 38, so dass die Planetenräder zwischen Hohlrad 35 sowie Sonnenrad 34 umlaufen und die Getriebeabtriebswelle 36 entsprechend der Übersetzung über den Planetenradträger 33 gleichsinnig mit der Getriebehauptwelle 30 angetrieben wird. In einer zweiten Schaltstellung wird das Hohlrad 35 mit dem Planetenradträger 33 verblockt, so dass das Planetengetriebe 4 und damit die Getriebeabtriebswelle 36 direkt mit der Drehzahl der Getriebehauptwelle 30 rotiert.

Aus der Kombination der Getriebegruppen 2, 3 und 4 des dargestellten Getriebeschemas ergeben sich insgesamt 2 x 3 x 2 = 12 Gänge. Der Kraftfluss des Getriebes 1 verzweigt sich nach einer Schaltfolge, bei der, beginnend mit dem 1. Gang im Hauptgetriebe 3, zunächst alternierend das Splittergetriebe 2 und das Hauptgetriebe 3 durchgeschaltet werden, so dass nacheinander 2 x 3 = 6 Gänge eines unteren Gangbereichs "1. Gang bis 6. Gang" geschaltet werden. Ist der 6. Gang erreicht, schaltet das Bereichsgetriebe 4 um, und es werden erneut das Hauptgetriebe 3 und das Splittergetriebe 2 alternierend durchgeschaltet, so dass wiederum 2 x 3 = 6 Gänge, nun aber in einem oberer Gangbereich "7. Gang bis 12. Gang", geschaltet werden. Das vorgeschaltete Splittergetriebe 2 schaltet auch die Rückwärts-Gang-Übersetzung i_{R} alternierend, so dass zudem zwei Rückwärtsgänge zur Verfügung stehen.

Zwischen dem Hauptgetriebe 3 und dem Bereichsgetriebe 4 ist ein zusätzlicher Zahnradsatz 17 als Zwischengang angeordnet, der über eine Elektromagnetkupplung 16 schaltbar ist. Der Zwischengangzahnradsatz 17 umfasst zwei auf den Vorgelegewellen 8 und 9 sitzende Festräder 39 und 41, die mit einem Losrad 40 auf der Getriebehauptwelle 30 im Eingriff stehen. Das Losrad 40 ist mit der Elektromagnetkupplung 16 verbunden und über diese mit der Getriebehauptwelle 30 drehfest verbindbar.

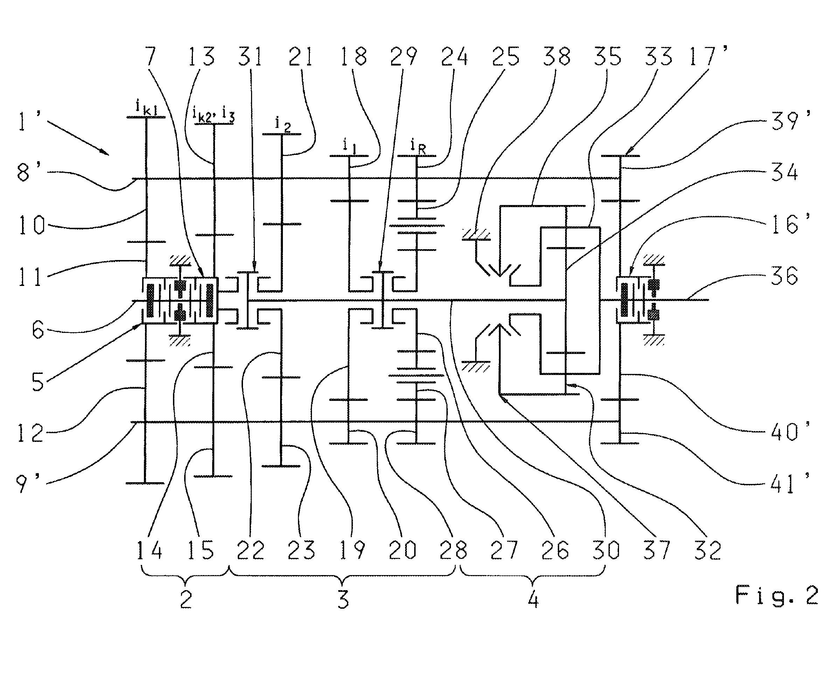

Die Fig. 2 zeigt ein vergleichbares Zwei-Vorgelegewellen-Getriebe 1' mit einem Zwischengangzahnradsatz 17' und einer Elektromagnetkupplung 16', die hinter dem Bereichsgetriebe 4, also direkt am Getriebeabtrieb, angeordnet sind. Zudem sind die Vorgelegewellen 8', 9' axial bis über das Bereichsgetriebe 4 hinaus verlängert. Der Zwischengangzahnradsatz 17' umfasst zwei auf den Vorgelegewellen 8', 9' sitzende Festräder 39', 41', die mit einem Losrad 40' auf der Getriebeabtriebswelle 36 im Eingriff stehen. Das Losrad 40' ist mit der Elektromagnetkupplung 16' verbunden und über diese mit der Getriebeabtriebswelle 36 drehfest verbindbar.

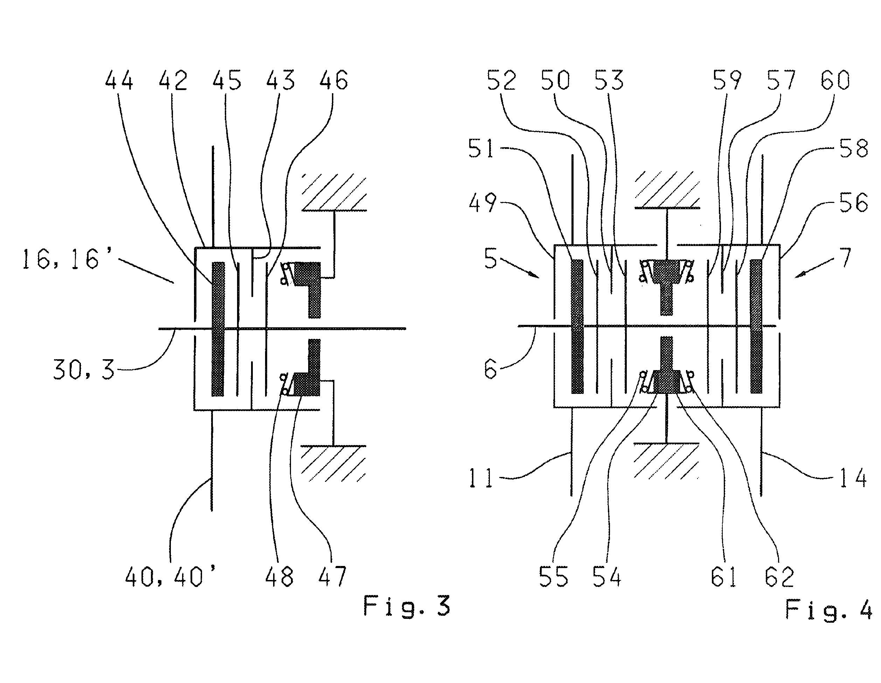

Fig. 3 und Fig. 4 zeigen die Elektromagnetkupplungen 5, 7, 16, 16' im Detail. In Fig. 3 ist die Elektromagnetkupplung 16, 16' des Zwischengangzahnradsatz 17, 17' dargestellt. Der Kupplungsantrieb, d.h. die Eingangsseite, ist als ein topfartiger Rotor 42 ausgebildet, der mit dem Losrad 40, 40' des Zwischengangzahnradsatz 17, 17' drehfest verbunden ist. Der Rotor 42 weist an seiner Innenseite eine ringförmige Reibscheibe 43 auf. Der Kupplungsabtrieb, also die Ausgangsseite, ist als ein scheibenförmiger Anker 44 ausgebildet, der drehfest und axial verschiebbar auf der Getriebehauptwelle 30 bzw. der Getriebeabtriebswelle 36 sitzt. Weiterhin sind zwei Reibscheiben 45, 46 angeordnet, welche die eingangsseitige Reibscheibe 43 axial einschließen. Die korrespondierenden Reibscheiben 43, 45, 46 sind relativ zueinander axial verschiebbar.

Koaxial dazu ist ein tellerförmiger Erregermagnet 47 mit einer nicht dargestellten Erregerspule angeordnet, dem stirnseitig eine Kugelrampeneinrichtung 48 zur Erhöhung der Andruckkräfte vorgelagert ist. Rotor 42, Anker 44, Reibmittel 43, 45, 46 und Erregermagnet 47 bilden zusammen ein Kupplungspaket, so dass bei Bestromung des Erregermagneten 47 ein entsprechend starkes Magnetfeld einen Schließzustand bewirkt, in dem die Reibmittel 43, 45, 46 im Reibschluss oder, je nach Schließgrad, im Schlupf sind und im Offenzustand bei ausgeschaltetem Magnetfeld mittels nicht dargestellter Rückstellmittel voneinander beabstandet sind.

In Fig. 4 sind die Elektromagnetkupplungen 5, 7 der Splittergruppe 2 dargestellt. Diese sind diametral gespiegelt auf der Antriebswelle 6 angeordnet, so dass die eine Kupplung 5 der ersten Gangkonstante iₖ₁ und die andere Kupplung 7 der zweiten Gangkonstante iₖ₂ zugeordnet ist. Der Aufbau der beiden Splittergetriebe-Kupplungen 5, 7 ist mit dem der Zwischengang-Kupplung 16, 16' vergleichbar, wobei Eingangsseite und Ausgangsseite jedoch vertauscht sind, d.h. der Antrieb erfolgt über die Antriebswelle 6 und der Abtrieb erfolgt über die Losräder 11 bzw. 14 der Gangkonstanten iₖ₁ bzw. iₖ₂.

Die der ersten Gangkonstante iₖ₁ zugeordnete Kupplung 5 umfasst dem entsprechend einen Rotor 49 mit einem ausgangsseitigen Reibmittel 50, der mit dem zugehörigen Losrad 11 drehfest verbunden ist, einen Anker 51 mit zugehörigen eingangsseitigen Reibmitteln 52, 53 sowie einen Erregermagneten 54 mit einer Kugelrampeneinrichtung 55.

Die der zweiten Gangkonstante iₖ₂ zugeordnete Kupplung 7 umfasst einen Rotor 56 mit einem ausgangsseitigen Reibmittel 57, der mit dem zugehörigen Losrad 14 drehfest verbunden ist, einen Anker 58 mit zugehörigen eingangsseitigen Reibmitteln 59, 60 sowie einen Erregermagneten 61 mit einer Kugelrampeneinrichtung 62. An der dem Hauptgetriebe 3 zugewandten ausgangsseitigen Stirnseite ist der Rotor 56 mit der Schalteinrichtung 31 des 2. Ganges und des 3. Ganges des Hauptgetriebes 3 verbunden (siehe Fig. 1).

Ein Verfahren zum Betrieb des beschriebenen Mehrgruppengetriebes beruht im Wesentlichen auf der Schaltung eines Zwischenganges, durch den die Zugkraft des Fahrzeuges während einer Neutralstellung in der Hauptgruppe 3 bei einem Gangwechsel erhalten bleibt. Demnach wird bei einer beispielhaften Hochschaltung mit einem Schaltvorgang im Hauptgetriebe 3 zur Zuschaltung eines Zwischenganges die Elektromagnetkupplung 16, 16' des Zwischengangzahnradsatzes 17, 17' zur Einstellung eines Schlupfes angesteuert. Dadurch stützt sich das Motordrehmoment an der Getriebehauptwelle 30 bzw. direkt an der Getriebeabtriebswelle 36 ab. Folglich wird das Hauptgetriebe 3 lastfrei. Die Motordrehzahl wird während der Momentenabstützung über die schleifende Zwischengang-Elektromagnetkupplung 16, 16' auf eine Synchrondrehzahl eines Zielgangs abgesenkt. Das bei der Drehzahlabsenkung freiwerdende Drehmoment wird zur Zugkrafterhaltung eingesetzt. Dann erfolgt die Umschaltung vom Ursprungsgang in den Zielgang, und abschließend das Öffnen der Elektromagnetkupplung 16, 16'.

Ist die Splittergruppe 2 an dem Gangwechsel unbeteiligt, so erfolgt der Antrieb über die eingelegte Gangkonstante iₖ₁, iₖ₂ und die Vorgelegewellen 8, 8', 9, 9' unter Umgehung der Hauptgruppe 3 zum Zwischengangzahnradsatz 17, 17'. Beinhaltet der Schaltvorgang jedoch ein Umschalten der Splittergruppe 2, so erfolgt dieses unter Last über die zugehörigen Elektromagnetkupplungen 5, 7, d.h. bei einem Wechsel zwischen den Gangkonstanten iₖ₁, iₖ₂ bleibt die Drehmomentverbindung zum Antriebsmotor in jedem Fall erhalten.

Bei einem dem Bereichsgetriebe 4 nachgeschalteten Zwischengangzahnradsatz 17' ist ein Umschalten des Gangbereichs automatisch zugkraftunterstützt. Bei einem dem Bereichsgetriebe 4 vorgeschalteten Zwischengangzahnradsatz 17 sind hingegen für eine Zugkraftunterstützung gegebenenfalls zusätzliche Maßnahmen erforderlich.

### Bezuaszeichenliste

- 1,1': Zwei-Vorgelegewellen-Getriebe, Mehrgruppengetriebe
- 2: Splittergetriebe
- 3: Hauptgetriebe
- 4: Bereichsgetriebe
- 5: Elektromagnetkupplung
- 6: Antriebswelle
- 7: Elektromagnetkupplung
- 8, 8': Vorgelegewelle
- 9, 9': Vorgelegewelle
- 10: Festrad
- 11: Losrad
- 12: Festrad
- 13: Festrad
- 14: Losrad
- 15: Festrad
- 16, 16': Elektromagnetkupplung
- 17, 17': Zwischengangzahnradsatz
- 18: Festrad
- 19: Losrad
- 20: Festrad
- 21: Festrad
- 22: Losrad
- 23: Festrad
- 24: Festrad
- 25: Zwischenrad
- 26: Losrad
- 27: Zwischenrad
- 28: Festrad
- 29: Schalteinrichtung
- 30: Getriebehauptwelle
- 31: Schalteinrichtung
- 32: Planetenradsatz
- 33: Planetenradträger
- 34: Sonnenrad
- 35: Hohlrad
- 36: Getriebeabtriebswelle
- 37: Schalteinrichtung
- 38: Gehäuse
- 39, 39': Festrad
- 40, 40': Losrad
- 41,41': Festrad
- 42: Rotor
- 43: Reibmittel
- 44: Anker
- 45: Reibmittel
- 46: Reibmittel
- 47: Erregermagnet
- 48: Kugelrampeneinrichtung
- 49: Rotor
- 50: Reibmittel
- 51: Anker
- 52: Reibmittel
- 53: Reibmittel
- 54: Erregermagnet
- 55: Kugelrampeneinrichtung
- 56: Rotor
- 57: Reibmittel
- 58: Anker
- 59: Reibmittel
- 60: Reibmittel
- 61: Erregermagnet
- 62: Kugelrampeneinrichtung
- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i_{R}: Hauptgetriebe-Rückwärtsgang

## Patentansprüche

1. Mehrgruppengetriebe (1') eines Kraftfahrzeuges, mit drei in einem Antriebsstrang angeordneten automatisierten Getriebegruppen (2, 3, 4), bei dem Mittel zur Zugkraftunterstützung bei Gangwechseln vorgesehen sind, wobei wenigstens eine als Lastschaltmittel ausgebildete Elektromagnetkupplung ( 16') angeordnet ist, über die, unter Kraftflussumgehung wenigstes einer als Zahnrad-Wechselgetriebe ausgebildeten Hauptgruppe (3), eine Wirkverbindung zwischen einer Antriebswelle (6) und einer Getriebeabtriebswelle (36) herstellbar ist, wobei eine vorgeschaltete, einer Antriebswelle (6) zugeordnete zweigängige Splittergruppe (2) und die zentrale, einer Getriebehauptwelle (30) zugeordnete mehrgängige Hauptgruppe (3) als Vorgelegewellengetriebe mit wenigstens einer Vorgelegewelle ( 8', 9') ausgebildet sind, und eine nachgeschaltete Bereichsgruppe (4) als ein Planetengetriebe ausgebildet ist,
**dadurch gekennzeichnet, dass** über einen mit der Elektromagnetkupplung (16') zusammenwirkenden und über die wenigstens eine Vorgelegewelle (8', 9') antreibbaren Zwischengangzahnradsatz (17') ein Zwischengang schaltbar ist, und dass der Zwischengangzahnradsatz (17') mit der Elektromagnetkupplung (16') der Bereichsgruppe (4) nachgeordnet ist, wobei ein auf der wenigstens einen Vorgelegewelle (8', 9') drehfest sitzendes Festrad (39', 41') mit einem auf der Getriebeabtriebswelle (36) drehbar gelagerten Losrad (40') im Eingriff steht, welches über die Elektromagnetkupplung (16') mit der Getriebeabtriebswelle (36) drehfest verbindbar ist.

2. Mehrgruppengetriebe nach Anspruch 1, **dadurch gekennzeichnet, dass** die Elektromagnetkupplung (16') einen antriebsseitigen topfartigen Rotor (42) aufweist, der einen abtriebsseitigen, axial verschiebbaren scheibenförmigen Anker (44) und einen elektrischen Erregermagneten (47) umgibt, wobei der drehbar auf einer abtriebsseitigen Welle (30,36) gelagerte Rotor (42) außenwandig mit dem Losrad (40') des Zwischengangzahnradsatzes (17') drehfest verbunden ist und innenwandig kupplungseingangsseitige Reibmittel (43) aufweist, der Anker (44) sowie kupplungsausgangsseitige Reibmittel (45, 46) drehfest auf der abtriebsseitigen Welle (30, 36) angeordnet sind, und die Reibmittel (43, 45, 46) relativ zueinander axial beweglich sind, so dass, abhängig von einer Bestromung des Erregermagneten (47), durch eine magnetkraftbewirkte Axialverschiebung des Ankers (44) die Reibmittel (43, 45, 46) miteinander in Wirkverbindung bringbar sind und eine schlupfende oder reibschlüssige Drehmomentübertragung der Elektromagnetkupplung (16') erzeugbar ist.

3. Mehrgruppengetriebe nach Anspruch 1 oder 2, **dadurch gekennzeichnet, dass** die Splittergruppe (2) zwei Gangkonstanten (iₖ₁, iₖ₂) umfasst, wobei jeder Gangkonstanten (iₖ₁, iₖ₂) jeweils eine weitere Elektromagnetkupplung (5, 7) zugeordnet ist, mittels der die Gangkonstanten (iₖ₁, iₖ₂) unter Last schaltbar sind.

4. Mehrgruppengetriebe nach Anspruch 3, **dadurch gekennzeichnet, dass** die Elektromagnetkupplung (5) der ersten, motorseitigen Gangkonstanten (iₖ₁) einen Anker (51), der axial verschiebbar auf der Antriebswelle (6) angeordnet ist und einen den Anker (51) umgebenden Rotor (49), der mit einem Losrad (11) der ersten Gangkonstanten (iₖ₁) drehfest verbunden sowie mit diesem drehbar auf der Antriebswelle (6) angeordnet ist und einen Erregermagnet (54) aufweist, und dass die Elektromagnetkupplung (7) der zweiten, getriebeseitigen Gangkonstanten (iₖ₂) einen Anker (58), der axial verschiebbar auf der Antriebswelle (6) angeordnet ist und einen den Anker (58) umgebenden Rotor (56), der mit einem Losrad (14) der zweiten Gangkonstanten (iₖ₂) drehfest verbunden und mit diesem drehbar auf der Antriebswelle (6) angeordnet ist, sowie einen Erregermagnet (61) aufweist, wobei auf der Antriebswelle (6) jeweils angeordnete kupplungseingangsseitige Reibmittel (52, 53, 59, 60) und an den Rotoren (49, 56) jeweils angeordnete kupplungsausgangsseitige Reibmittel (50, 57) wechselseitig in Reibschluss bringbar sind, so dass die Losräder (11, 14) wahlweise mit der Antriebswelle (6) drehfest verbindbar sind.

5. Mehrgruppengetriebe nach einem der Ansprüche 1 bis 4, **dadurch gekennzeichnet, dass** die Bereichsgruppe (4) als ein Lastschaltgetriebe ausgebildet ist.

6. Mehrgruppengetriebe nach einem der Ansprüche 1 bis 5, **dadurch gekennzeichnet, dass** wenigstens eine der vorgesehenen Elektromagnetkupplungen (5, 7, 16') eine Kugelrampeneinrichtung (48, 55, 62) aufweist.

## Claims

1. Multi-group transmission (1') for a motor vehicle, having three automated transmission groups (2, 3, 4) arranged in a drive train, in which means for assisting the tractive force during gearspeed changes are provided, wherein at least one solenoid clutch (16'), which is embodied as a power shift means, is arranged, by means of which solenoid clutch (16') an operative connection can be produced between a drive shaft (6) and a transmission output shaft (36) by bypassing the force flow of at least one main group (3) which is embodied as a gear wheel change gearbox, wherein a two-gear splitter group (2) which is arranged upstream and assigned to a drive shaft (6) and the central multigearspeed main group (3) which is assigned to a transmission main shaft (30) are embodied as a countershaft transmission with at least one countershaft (8', 9'), and a range group (4) which is arranged downstream is embodied as a planetary gear mechanism,
**characterized in that** an intermediate gearspeed can be shifted by means of an intermediate gearspeed gear wheel set (17') which interacts with the solenoid clutch (16') and can be driven by means of the at least one countershaft (8', 9') and **in that** the intermediate gearspeed gear wheel set (17') with the solenoid clutch (16') is arranged downstream of the range group (4), wherein a fixed gear wheel (39', 41') which is seated in a rotationally fixed fashion on the at least one countershaft (8', 9') is in engagement with a freely moving gear wheel (40') which is rotatably mounted on the transmission output shaft (36) and which can be connected in a rotationally fixed fashion to the transmission output shaft (36) via the solenoid clutch (16').

2. Multi-group transmission according to Claim 1, **characterized in that** the solenoid clutch (16') has a drive-side pot-like rotor (42) which surrounds an output-side disc-shaped armature (44), which is axially displaceable, and an electric exciter magnet (47), wherein the rotor (42) which is rotatably mounted on an output-side shaft (30, 36) is connected in a rotationally fixed fashion on the outer wall to the freely moving gear wheel (40') of the intermediate gearspeed gear wheel set (17'), and has on the inner wall clutch-input-side friction means (43), the armature (44) and the clutch-output-side friction means (45, 46) are arranged in a rotationally fixed fashion on the output-side shaft (30, 36), and the friction means (43, 45, 46) can move axially relative to one another, with the result that the friction means (43, 45, 46) can be operatively connected to one another by magnetic-force-induced axial displacement of the armature (44) as a function of energization of the exciter magnet (47), and slipping or frictionally locking transmission of the torque of the solenoid clutch (16') can be generated.

3. Multi-group transmission according to Claim 1 or 2, **characterized in that** the splitter group (2) comprises two gearspeed constants (iₖ₁, iₖ₂), wherein each gearspeed constant (iₖ₁, iₖ₂) is respectively assigned a further solenoid clutch (5, 7) by means of which the gearspeed constants (iₖ₁, iₖ₂) can be power shifted.

4. Multi-group transmission according to Claim 3, **characterized in that** the solenoid clutch (5) of the first engine-side gearspeed constant (iₖ₁) has an armature (51), which is arranged in an axially displaceable fashion on the drive shaft (6), and a rotor (49) which surrounds the armature (51) and is connected in a rotationally fixed fashion to a freely moving gear wheel (11) of the first gearspeed constant (iₖ₁), and is arranged therewith in a rotatable fashion on the drive shaft (6) and has an exciter magnet (54) and **in that** the solenoid clutch (7) of the second, transmission-side gearspeed constant (iₖ₂) has an armature (58), which is arranged in an axially displaceable fashion on the drive shaft (6), and a rotor (56) which surrounds the armature (58) and is connected in a rotationally fixed fashion to a freely moving gear wheel (14) of the second gearspeed constant (iₖ₂), and is arranged therewith in a rotatable fashion on the drive shaft (6), and an exciter magnet (61), wherein clutch-input-side friction means (52, 53, 59, 60) which are respectively arranged on the drive shaft (6) and clutch-output-side friction means (50, 57) which are respectively arranged on the rotors (49, 56) can be alternately placed in frictional locking engagement, with the result that the freely moving gear wheels (11, 14) can be optionally connected to the drive shaft (6) in a rotationally fixed fashion.

5. Multi-group transmission according to one of Claims 1 to 4, **characterized in that** the range group (4) is embodied as a power shift transmission.

6. Multi-group transmission according to one of Claims 1 to 5, **characterized in that** at least one of the solenoid clutches (5, 7, 16') which is provided has a ball ramp device (48, 55, 62).

## Revendications

1. Transmission à plusieurs groupes (1') d'un véhicule automobile, comprenant trois groupes de transmission automatisés (2, 3, 4) disposés dans une chaîne cinématique, dans laquelle des moyens sont prévus pour l'assistance à la force de traction lors de changements de vitesse, au moins un embrayage électromagnétique (16') réalisé sous forme de moyen de commutation de charge étant prévu, lequel permet d'établir une liaison fonctionnelle entre un arbre d'entraînement (6) et un arbre de prise de force de la transmission (36) en contournant le flux de force d'au moins un groupe principal (3) réalisé sous forme de variateur de vitesses à roues dentées, un groupe répartiteur à deux rapports (2) monté en amont, associé à un arbre d'entraînement (6), et le groupe principal central (3) à plusieurs rapports, associé à un arbre principal de la transmission (30), étant réalisés sous forme de transmission à arbre intermédiaire comprenant au moins un arbre intermédiaire (8', 9'), et un groupe périphérique (4) monté en aval étant réalisé sous forme de transmission planétaire,
**caractérisée en ce qu'**un rapport intermédiaire peut être commuté par le biais d'un jeu de roues dentées de rapport intermédiaire (17') coopérant avec l'embrayage électromagnétique (16') et pouvant être entraîné par le biais de l'au moins un arbre intermédiaire (8', 9'), et **en ce que** le jeu de roues dentées de rapport intermédiaire (17') avec l'embrayage électromagnétique (16') est disposé en aval du groupe périphérique (4), un pignon fixe (39', 41') reposant de manière solidaire en rotation sur l'au moins un arbre intermédiaire (8', 9') étant en prise avec un pignon fou (40') monté à rotation sur l'arbre de prise de force de la transmission (36), lequel peut être connecté de manière solidaire en rotation à l'arbre de prise de force de la transmission (36) par le biais de l'embrayage électromagnétique (16').

2. Transmission à plusieurs groupes selon la revendication 1, **caractérisée en ce que** l'embrayage électromagnétique (16') présente un rotor (42) en forme de pot du côté de l'entraînement, lequel entoure un induit (44) en forme de disque déplaçable axialement, du côté de la prise de force, et un aimant excitateur électrique (47), le rotor (42) monté à rotation sur un arbre du côté de la prise de force (30, 36) étant connecté de manière solidaire en rotation du côté de sa paroi extérieure au pignon fou (40') du jeu de roues dentées de rapport intermédiaire (17') et présentant du côté de sa paroi intérieure des moyens de friction (43) du côté de l'entrée d'embrayage, l'induit (44) ainsi que les moyens de friction (45, 46) du côté de la sortie de l'embrayage étant disposés de manière solidaire en rotation sur l'arbre du côté de la prise de force (30, 36), et les moyens de friction (43, 45, 46) étant déplaçables axialement les uns par rapport aux autres, de sorte qu'en fonction d'une alimentation électrique de l'aimant excitateur (47), par un déplacement axial de l'induit (44) provoqué par la force de l'aimant, les moyens de friction (43, 45, 46) puissent être amenés en liaison fonctionnelle les uns avec les autres et qu'un transfert de couple glissant ou par engagement par friction de l'embrayage électromagnétique (16') puisse être produit.

3. Transmission à plusieurs groupes selon la revendication 1 ou 2, **caractérisée en ce que** le groupe répartiteur (2) comprend deux constantes de rapport (iₖ₁, iₖ₂), chaque constante de rapport (iₖ₁, iₖ₂) étant à chaque fois associée à un autre embrayage électromagnétique (5, 7), au moyen duquel les constantes de rapport (iₖ₁, iₖ₂) peuvent être commutées en charge.

4. Transmission à plusieurs groupes selon la revendication 3, **caractérisée en ce que** l'embrayage électromagnétique (5) de la première constante de rapport (iₖ₁) du côté du moteur présente un induit (51), qui est disposé de manière déplaçable axialement sur l'arbre d'entraînement (6), et un rotor (49) entourant l'induit (51), qui est connecté de manière solidaire en rotation à un pignon fou (11) de la première constante de rapport (iₖ₁) et qui est disposé de manière à pouvoir tourner avec celui-ci sur l'arbre d'entraînement (6), ainsi qu'un aimant excitateur (54), et **en ce que** l'embrayage électromagnétique (7) de la deuxième constante de rapport (iₖ₂) du côté de la transmission présente un induit (58), qui est disposé de manière déplaçable axialement sur l'arbre d'entraînement (6) et un rotor (56) entourant l'induit (58), qui est connecté de manière solidaire en rotation à un pignon fou (14) de la deuxième constante de rapport (iₖ₂) et qui est disposé de manière à pouvoir tourner avec celui-ci sur l'arbre d'entraînement (6), ainsi qu'un aimant excitateur (61), des moyens de friction (52, 53, 59, 60) du côté de l'entrée d'embrayage, disposés à chaque fois sur l'arbre d'entraînement (6), et des moyens de friction (50, 57) du côté de la sortie de l'embrayage, disposés à chaque fois sur les rotors (49, 56), pouvant être amenés en alternance en engagement de friction, de sorte que les pignons fous (11, 14) puissent être connectés de manière solidaire en rotation et de manière sélective à l'arbre d'entraînement (6).

5. Transmission à plusieurs groupes selon l'une quelconque des revendications 1 à 4, **caractérisée en ce que** le groupe périphérique (4) est réalisé sous forme de transmission à commutation de charge.

6. Transmission à plusieurs groupes selon l'une quelconque des revendications 1 à 5, **caractérisée en ce qu'**au moins l'un des embrayages électromagnétiques prévus (5, 7, 16') présente un dispositif de rampe sphérique (48, 55, 62).
